# EUROPEAN PATENT APPLICATION

(11) **EP 3 978 449 A1**
(43) Date of publication of application: **06.04.2022**
(21) Application number: 20199372.2
(22) Date of filing: 30.09.2020
(51) Int. Cl.: C03B 5/03, C03B 5/167, C03B 5/185, C03B 5/193

(54) **INTEGRATED BUBBLING NOZZLE AND METHOD OF ZONE HOMOGENIZATION OF GLASS MELT DURING MELTING USING THE SAME**

(71) Applicant: Forglass Engineering spolka z ograniczona odpowiedzialnoscia, 30-415 Krakow (PL)
(72) Inventor: Knast, Piotr, 31-157 Krakow (PL); Dylag, Andrzej, 32-091 Michalowice (PL); Jedrzejczyk, Leszek, 97-310 Baby (PL); Klisch, Marian, 38-400 Krosno (PL); Zomerski, Krzysztof, 30-198 Krakow (PL)
(74) Representative: AOMB Polska Sp. z.o.o.

(57) **Abstract**

The invention relates to an integrated bubbling nozzle (1) comprising an inner core (2) with a system of gas transport channels (3) arranged in parallel, the core (2) being made of ceramics containing at least 90% by weight of alumina and housed in a thick-walled casing (4) made of molybdenum disilicide. In the integrated bubbling nozzle according to the invention, the inner core (2) is permanently connected to a thick-walled casing (4) by means of a refractory ceramic cement (5). The invention also relates to a method of zone homogenization of glass melt during melting carried out with the use of bubbling systems composed of the integrated bubbling nozzles according to the invention.

## Description

### Field of the Invention

The invention relates to a new construction of a bubbling nozzle for generating forced convection currents in a glass melt and a method of zone homogenization of the glass melt during melting with the use of appropriately configured arrangements of these nozzles.

### State of the art

Bubbling is a technique for generating forced convection currents in fluids used in many chemical and metallurgical processes to accelerate the progress of these chemical processes and to homogenize the system faster.

US 2,254,079 describes a method and apparatus for melting and fining glass using an arrangement of holes placed in a plate made of silica, fireclay or alunda in a shallow part of the basin (so-called clarifying shelf) for fining glass by sequential feeding of gases, first CO and then O₂.

US 2,387,222 describes a method of assisting convection currents in a continuous operation furnace with an array of bubbling nozzles configured in a line across the furnace basin by feeding air or other gas.

US 2,909,005 describes a continuous glass melting furnace in the bottom of which, in any selected area from the charger to the throat, a configuration of bubbling nozzles is arranged in form of a system of parallel lines and/or V-shaped or triangular and/or semicircular, or an arc, or any combination of these configurations.

GB 827692 describes a method and device for controlling convection currents in molten glass or metal, and in particular for controlling these currents by means of gas bubble jets introduced into the melt through a system of bubbling nozzles in order to force a controlled circulation of glass or metal in the furnace. The invention is an improvement over the previously described method and proposes the occasional introduction of individual gas volumes into a given glass at relatively high pressures while maintaining a much lower pressure in the gas supply pipe at least during the periods between high pressure delivery to the nozzles.

US 294512 describes a furnace construction without throat for continuous glass production, which is characterized by a deep melting portion and a shallow fining portion, wherein one or two lines of bubbling nozzles are installed just before the threshold connecting the two portions of the basin to stop and return glass melt containing the relics of unmelted batch by a return convection current forced by gas streams fed through bubbling nozzles.

US 3,030,736 describes a device and method improving glass melt homogenization and utilization of energy transferred from the combustion space by inducing circulating convection currents by means of installing four square-shaped bubbling nozzles in the central part of the basin bottom, said nozzles being made of zirconium aluminate-based ceramics or platinum or molybdenum.

US 3,268,320 describes the construction of a continuous glass melting tank furnace provided with arrays of electrodes and bubbling nozzles arranged in the bottom of the furnace. A line of electrodes is located in the central part of the basin transverse to the glass flow direction and the bubbling line is located along the furnace axis between the electric boosting line and the throat. By means of coordinated electric boosting and bubbling action, it is possible to effectively reduce the inhomogeneity of the glass melt, in particular the foam containing unmelted sand relics.

US 3,294,509 describes a method for symmetrising the batch distribution and melting progress and well as foam removal process in a cross-fired furnace by asymmetrically setting parameters for boosting and bubbling lines located longitudinally on both sides of the furnace.

US 3,305,340 describes a tank furnace construction in which arrays of electrode-bubblers configured in lines are placed near the basin side walls. The electrode-bubbler is a molybdenum electrode with an axially hollow supply channel for an inert gas, e.g. nitrogen, from which the gas outlet channels extend radially and ascendingly to the glass melt. The aim of this system is to reverse the direction of the lateral currents of the glass melt in the basin: from the walls below the glass surface towards the furnace axis and then back towards the wall, creating closed circulation loops.

US 3,397,973 describes construction of a bubbling nozzle equipped with a channel for introducing a cooling agent locally cooling the glass melt, which allows the selected nozzle to be turned on or off periodically.

US 3,622,296 describes a method of assisting the fining of glass, in particular borosilicate glass, by means of sodium chloride fed to the batch and helium directed to the glass melt by bubbling nozzles.

US 3,811,859 and US 3,811,860 describe a bubbling system based on electrolysis of molten glass. In an electrode system where the anode is SnO₂ and the cathode is molybdenum, both being connected in a DC circuit, a stream or streams of fine oxygen bubbles with a diameter of 1 to 5 mm can be produced. Streams of these fine bubbles are much more effective than the standard bubbling based on releasing gases pumped from an external source.

US 3,853,524 describes construction of a bubbling nozzle made of a molybdenum tube covered with a cermet, for example a layer of molybdenum disilicide. According to the author, this solution allows for the production of monolithic bubbling tubes, which eliminates the disadvantages of two-element nozzles consisting of a molybdenum part working in a glass melt, connected to a steel part by a weld made of a palladium-nickel alloy placed in the ceramics of the furnace bottom. Nitrogen was fed through the nozzles of such design.

US 4,544,396 describes bubbling systems composed of two rows of bubblers mounted transversely across the basin, wherein the gas flow rate is either greater at the side walls of the basin or the nozzles of the second row are positioned higher in order to obtain intentionally defined directions and the intensity of convection currents in the glass melt, primarily in order to stop undesirable flows of the glass melt near the side walls of the basin directly to the throat, which bypass the hot spot and thereby prevents its proper fining.

US 4,600,425 describes a water-jacketed bubbler design where the actual bubbling nozzle is made of stainless steel, Inconel or molybdenum in the upper part and of Inconel in the lower part, joined by a nickel-palladium weld. In another variant of the bubbler, a protective gas: inert or reducing, is blown into the space between the actual bubbling nozzle and the Inconel shield. In order to improve the resistance of molybdenum to oxidation, the outer surface of the nozzle is coated with MoSi₂.

US4718931 describes a method of using bubbling to control batch blanket thickness in 100% electric furnaces with so-called cold top. The bubbling nozzles supplying air are located in the side walls of the furnace basin.

US 5,188,649 and US 5,340,372 describe a method of vitrifying asbestos-containing waste, medical waste, toxic materials and radioactive waste in an electric furnace equipped with at least 2 electrodes and at least one bubbling nozzle through which air or, preferably, argon or nitrogen, is fed. The waste is melted with the addition of compounds of alkaline elements. The disadvantage of high alkalinity of the resulting melt is its high conductivity, which limits the electric power or current density and thus slows down the melting process. Gas bubbles released from the bubbling nozzles mix the batch and reduce the cross-sectional area through which the current flows, which increases its resistance and thus increases the concentration of heating power in this area, which favors the intensification of melting. The nozzles are made of chromium nickel alloys, most preferably Inconel 690. The material of the nozzles is sufficient for bubbling melts obtained at temperatures not exceeding 1100 °C inherent in ladle type furnaces used for waste neutralization.

US 6,085,551 describes a furnace for melting glasses requiring high temperature (approx. 1600 °C) containing volatile components. This furnace is equipped with a so-called fining shelf, wherein the basin depth is no more than 150 mm. In front of this shelf there is a row of electrodes creating a barrier boost, and even earlier - a row of bubblers. The bubbling and boosting lines generate locally circulating convection currents carrying the glass from the bottom zones to the mirror surface.

US 6,722,161 describes a possibility of achieving additional advantages in a melting process in oxy-fuel furnaces where roof-mounted burners and bottom bubbling nozzles are used simultaneously. These possibilities listed include: a possibility of lowering the melt temperature and/or the concentration of alkali in the glass by bubbling with water or steam. The authors emphasize the role of water as an (admittedly) minor component of glass, which reduces the viscosity more effectively and improves the workability of the glass. Moreover, lowering the viscosity of the glass with an increased water content entails the possibility of lowering the temperature in the batch melting zone to the most advantageous range of 1200-1300 °C and thereby significantly reducing the corrosion rate of the palisade refractories. According to the authors, an even better effect can be achieved by the correlated supply of oxygen and hydrogen. By using one of these gases, or both in a different order and place, it is possible to influence the redox of the glass melt and thus the iron balance, which is important when melting colorless glasses as well as the colored glasses: amber and green. According to the authors, bubbling with SO₂ and/or SO₃ is also a more effective method of supplying SO₃ for clarification than introduction of Na₂SO₄ or CaSO₄ to the batch because it provides a higher degree of retention of this gas in the melt. The associated possibility of lowering the sulfate content of the glass has also the obvious advantage of reducing the environmental burden associated with glass melting.

US 7,225,643 describes a recirculating bubbler for 100% electric furnaces with a cold top, the main advantage of which is to force the bubbled glass melt into the bubbler interior. To achieve this effect, the bubbler has a structure of two coaxial tubes, one with a smaller diameter arranged axially for transporting the bubbling gas from the top to the bottom and another one having a larger diameter, wherein the glass flows into the space between the two tubes. The glass is blown upwards by the gas stream towards the batch layer.

EP 0270518 describes a nozzle design used for rinsing/cleaning molten metals or glass with a complex structure, where the actual purging gas transport nozzle is housed in a ceramic or metal casing, which in turn is housed in a ceramic block. The essence of the solution is to feed a gaseous or liquid medium or one of them with the addition of a powder into the gap between the nozzle transporting the purge gas and its casing, thereby reducing the corrosive effect of the cleaning gas on the transport nozzle.

CN 102153269 of 2011.08.17 describes a bubbling device comprising a central core made of porous ceramics for gas transport and an outer metal jacket through which cooling water flows.

US 20110011134 describes an injector of hydrogen and oxygen into a glass melt. According to the authors, the use of reactive gases improves fining, dissolution of raw material grains and reduces foam on the glass surface.

WO2011127877 describes a bubbling nozzle with a variable diameter, wherein the portion of smaller diameter is made of MoSi₂.

CN 107010815 of 2017.08.04 describes a bubbling nozzle consisting of two coaxial tubes, the first one being made of molybdenum and the second one - of heat-resistant steel. The aim of the presented solution is to effectively prevent oxidation of the molybdenum nozzle.

WO 2017035174 describes a three sectional glass melting furnace for producing displays (FPDs), in which one of the segments is a bubbling basin.

### Summary of the state of the art

### Bubbling function

An ideal molten glass bubbling nozzle should: 1) allow for generating a dense stream of very fine bubbles and be resistant glass clogging in the event of gas flow being stopped, 2) be resistant to the chemical activity of reactive gases, both oxidizing and reducing, 3) be resistant to corrosive and erosive effects of glass at high temperatures (even up to 1500°C) and shall not generate glass defects, 4) have high mechanical strength and maintain it at high temperature. None of the nozzles proposed so far meets all or at least most of the criteria.

Due to the installation of the bubbling arrangement at the furnace bottom, the history of their application must absolutely be viewed in the light of the history of development of the refractory materials used to build the furnaces. Since until the turn of the 19^{th} and 20^{th} centuries most of the basins were built of fireclay, installing anything in the furnace bottom was excluded due to the low corrosion resistance of these materials and the enormous risk of glass leakage. The situation was only slightly improved by the use of silimanite and mullite materials in the 1930s. The development of fused cast materials, first high-aluminum and then AZS (derived from the Al₂O₃-ZrO-SiO₂ system), took place in the late thirties and forties (after World War II). The use of these materials extended the furnace campaign period from about 18 months to 3-5 years and allowed for a significant increase in the melt temperature. The invention of AZS also triggered a search for ways to intensify the melting process and improve the quality of the glass melt, including its homogeneity. At the same time, the large-scale implementation of AZS materials and a significant increase in melting unit capacity, which was necessarily accompanied by a significant increase in glass temperatures (> 1500°C) resulted in generating a new source of heterogeneity - supersaturated glass with AZS corrosion products - aluminum and zirconium. This explains the significant increase in number of technical solutions for bubbling applications in glass furnaces from the 1960s to the present day.

The first bubblers were in form of single-hole tubes with the upper part made of molybdenum immersed in or in contact with the glass and the lower (low temperature) part of stainless steel. Both elements were welded with an alloy of nickel and palladium. Such material choices excluded the use of air, oxygen or steam as bubbling gases (nitrogen was the basic bubbling gas), which significantly influenced their operating costs and thus limited their functions and scope of use. US 3,853,524 proposed to use molybdenum tubes with the outer surface covered with a layer of cermet - MoSi₂ in order to improve their oxidation resistance. After the recommended coating of the inner surface of these nozzles with MoSi₂ as well, the use of air as the bubbling gas became possible.

As for the size of the bubbles produced, the best solution in this respect is described in US 3,811,859 and US 3,811,860, wherein the phenomenon of glass electrolysis is used and oxygen bubbles are formed on an anode made of calcium- or yttrium-doped ZrO₂. The cathode in this system is molten sodium, molten tin, or sodium-tin alloys separated from the glass by a cation-permeable refractory material, most preferably β-Al₂O₃. Strong streams of O₂ bubbles ranging in size from 1 to 5 mm can be generated electrolytically, mixing the glass in the most efficient manner. The same effect cannot in principle be obtained by physically pumping the gas through ceramics with a channel system (EP 0270518) or porous ceramics (CN 102153269), where similar bubble sizes can only be produced at the cost of lowering the inlet pressure and gas flow, which radically weakens the mixing effect in the glass. A significant disadvantage of electrolytic bubble generation is the unstability of the system parameters: a large voltage increase necessary to maintain the current intensity, which requires switching it off after approx. 2 hours of operation. Regarding the size of gas bubbles, the bubblers based on multi-opening ceramics, such as described in EP 0270518, show advantages over devices based on single gas transport channels (e.g. US 4,600,425). Bubblers using multi-opening ceramics are also much more resistant to be clogged by the glass in the event of periodic stopping of the gas flow. Single-opening devices made of electrically conductive materials: molybdenum, steel or austenitic nickel-chromium alloys of the Inconel^{®} type use the current flow to heat and thereby lower the viscosity of the glass in the opening, which sometimes allows it to be pushed out with the bubbling gas. The disadvantage of these systems, in turn, is the need for cooling to prevent oxidation (molybdenum) or accelerated corrosion in the glass melt (steel and Inconel^{®}). Cooling the bubbler also cools the surrounding glass, and thus increases its viscosity, which adversely affects the homogenization processes and the energy efficiency of the furnace. The amount of cooling medium used and the associated size of the area of the supercooled glass increases with the height of the bubbling nozzle above the furnace bottom. In the case of intensive expansion of bubbling systems in form of multi-nozzle systems dispersed in the batch melting zone, dispersed or in-line in the melting zone and in-line in the resorption zone, the use of water-cooled bubblers protruding into the glass to a height of 500 - 600 mm would involve heat losses of 1 - 2 percents of melting energy, which is unacceptable for most glass producers.

As for the functions of bubblers or systems thereof in a glass furnace, their most frequently defined role is to force convection movements of the glass melt in order to: accelerate the melting process (US 2,909,005, US 6,722,161), symmetrize the melting progress in cross-fired furnaces with reversible firing system (US 3,294,509), block streams of glass along the walls and bypassing the furnace hot spot (US 4,544,396), remove inhomogeneities (US 3,268,320, US 3,811,859, US 3,811,860), reduce foam in the furnace (US 3,28320, US 3,397,973), assist fining (US 2,254,079, US 3,622,296, US 6,722,161) including refractory glasses requiring high temperatures (US 6,085,551 and WO 2017035174), or to improve homogeneity of glass molten in 100% electric furnaces with cold top (US4718931, US 7225643).

The broadest range of new functions and features obtainable by combining roof-mounted oxygen burners and bubbling is described in US 6,722,161. Among these possibilities it mentions: the possibility of lowering the melt temperature and/or the alkali concentration in the glass by bubbling with water or steam. The authors emphasize the role of water as a (admittedly) minor component of glass, which reduces the viscosity more effectively and improves the workability of the glass. Moreover, lowering the viscosity of the glass with an increased water content entails the possibility of lowering the temperature in the batch melting zone to the most advantageous range of 1200-1300 °C and thereby significantly reducing the corrosion rate of the palisade refractories. According to the authors, an even better effect can be achieved by the correlated supply of oxygen and hydrogen. By using one of these gases, or both in a different order and place, it is possible to influence the redox of the glass melt and thus the iron balance, which is important when melting colorless glasses as well as the colored glasses: amber and green. According to the authors, bubbling with SO₂ and/or SO₃ is also a more effective method of supplying SO₃ for fining than introduction of Na₂SO₄ or CaSO₄ to the batch because it provides a higher degree of retention of this gas in the melt. The associated possibility of lowering the sulfate content of the glass has also the obvious advantage of reducing the environmental burden associated with glass melting.

### Material and construction of bubblers

A majority of patent specifications related to continuous glass melting provide no teaching about the material from which the bubblers were made. In patents describing (at least theoretically) application solutions for bubbling in glass furnaces, i.e. in the 1960s and later, the following materials were used for the gas-feeding nozzles: molybdenum (US 3,305,340, US 3,853,324), steel (US 3,294,509, US 3,397,973, US 4,600,425), austenitic nickel-chromium alloys of Inconel^{®} type (US 4,600,425, US 5,188,649), MoSi₂-coated molybdenum (US 3,853,324), molybdenum, steel or austenitic nickel-chromium alloys of Inconel^{®} type in a gas-cooled steel casing (US 4,600,425), multi-channel ceramics for transporting gas of undefined composition in a steel casing (EP 0270518) or porous ceramics for transporting gas of undefined composition in a steel casing (CN 102153269), MoSi₂ (WO2011127877). US 20020121113A1 is a patent application relating to a gas transport material for use in bubblers for glass furnaces. According to US 2002/0121113 the porous materials based on the following metals: molybdenum, tungsten, platinum, iridium and their alloys are preferred over ceramics based on alumina, silicon oxide, silicon carbide or aluminosilicates. The pore size in the gas transport materials should be less than 500 mm, preferably less than 100 mm.

### Summary of the invention

In a first aspect, the invention relates to an integrated bubbling nozzle comprising an inner core with a system of gas transport channels arranged in parallel, the core being made of ceramics containing at least 90% by weight of alumina and housed in a thick-walled casing made of molybdenum disilicide, wherein the inner core is permanently connected to the thick-walled casing by means of a refractory ceramic cement. Preferably, the diameter of the gas transport channels is less than 1 mm, most preferably less than 0.5 mm.

In a second aspect, the invention relates to a method of zone homogenization of glass melt during melting, said method utilizing at least two of the following bubbling systems: (i) a dispersed bubbling in a batch melting zone, (ii) an in-line bubbling in a melting zone, and (iii) an in-line bubbling in a resorption zone (deep part of the basin before throat inlet), wherein the bubbling systems are composed of the integrated bubbling nozzles of the invention defined above. In a preferred embodiment of the method according to the invention, the integrated bubbling nozzles forming the dispersed bubbling in the batch melting zone are arranged in the bottom across the width of a basin in a regular or irregular manner in the area from 0 to 0.4 of its length, calculated from the basin back wall along the glass melt flow direction. In another preferred embodiment, the integrated bubbling nozzles forming the in-line bubbling in the melting zone are arranged in the bottom in a line along the basin axis in a regular or irregular manner in the area from 0.3 to 0.6 of its length, calculated from the basin back wall along the direction of glass melt flow direction. In yet another preferred embodiment, the integrated bubbling nozzles forming the in-line bubbling of resorption are arranged in the bottom in a line along the basin axis in a regular or irregular manner in the area from 0.85 to 0.95 of its length, calculated from the basin back wall along the direction of glass melt flow direction.

In a preferred embodiment of the method according to the invention, at least one electric boosting system is simultaneously used during the melting, preferably selected from the melting boosting and the barrier boosting . Preferably, at least one electric boosting system uses integrated electrodes-bubbling nozzles, wherein the bubbling nozzles are the integrated bubbling nozzles according to the invention. In a of the preferred embodiments of the method according to the invention, the electric heating system consists of 6 or more electrodes placed in the bottom of the basin in the area up to 0.4 of its length, calculated from the basin back wall along the direction of glass melt flow direction. In another preferred embodiment of the method according to the invention, the electric boosting system consists of 6 or more electrodes placed in the bottom of the tank in one or 2 lines in the area from 0.7 to 0.85 of its length, calculated from the basin back wall along the direction of glass melt flow direction

Preferably, in the method according to the invention, gas outlets of the integrated bubbling nozzles are located 50 to 700 mm above the furnace bottom. In another preferred embodiment of the method according to the invention, air or water or steam or air enriched with steam or nitrogen or natural gas or propane or butane or helium is used as the bubbling gas, whereby preferably gas flow rate per nozzle is between 0.2 and 2 l/min.

The chemical heterogeneity of the glass is not only an aesthetic defect that worsens its visual perception (image deformation and/or visible streaks, knots, threads of other glass), but also the reason of its uncontrolled behavior during forming, annealing and heat treatment and the source of reject at these production stages or the reason for the worse mechanical strength of the manufactured products. The technology of zone homogenization of the glass melt during melting utilizes at least two (out of three) and most preferably three bubbling systems to significantly improve the chemical homogeneity of the glass. The first of the systems as a dispersed bubbling is installed in the bottom of the basin in the batch melting zone (BRZ). Its function is to disintegrate the batch blanket and to accelerate the mixing of the batch raw material fed to the furnace with the primary melt formed as a result of the reaction between the batch components and the primary glass melt in the furnace, thereby reducing the time and energy input required for converting the raw material batch into glass. The second system is an in-line melting (in the melting zone) bubbling (BLT) which is installed in the bottom of the basin in the longitudinal axis of the furnace in the area between ∼0.3 and ∼0.6 of its length. Its operation accelerates the dissolution of relict sand grains and the homogenization of the primary melt with the base glass, thereby shortening the melting time. The third system is an in-line resorption (in the resorption zone) bubbling (BLR) installed at the bottom of the deep part of the furnace basin between ∼0.85 and ∼0.95 of its length. The effect of this bubbling operation is an improvement of the conditions for the secondary dissolution of gases from fine bubbles remaining in the glass melt after the fining process, which improves the glass quality. In addition, lateral convection currents in the areas of the basin between its longitudinal axis and the side walls produced by the BLT and BLR systems contribute to the ongoing mixing (homogenization) of the base glass melt in the furnace with the glass resulting from the dissolution of the furnace refractory corrosion products, which reduces production waste resulting from chemical streaks, the so-called "cat's scratches". All three systems utilize integrated bubbling nozzles (ZDB) made of an alumina core with a several (up to 20) parallel gas transport channels permanently connected by a ceramic cement with a MoSi₂ casing.

### Brief description of figures of drawings

The invention is illustrated in the preferred embodiments with reference to the drawing, in which:
Fig. 1 is a cross-sectional view of an integrated bubbling nozzle (hereinafter ZDB) according to the invention;
Fig. 2 is a top view of the hot melt basin with a marked area of dispersed bubbling in the batch melting zone;
Fig. 2a is a top view of the hot melt basin with a marked area of dispersed bubbling and electric boosting the batch melting zone according to the method of the invention;
Fig. 3 is a top view of the hot melt basin with a marked area of in-line melting bubbling (BLT);
Fig. 3a is a circulation diagram of the lateral convection currents of the glass melt generated by the in-line bubbling installed in the bottom of the basin along the axis of the furnace;
Fig. 4 is a top view of the hot melt basin with a marked area of in-line resorption bubbling (BLR);
Fig. 5 is a cross-section view of a portion of the bottom of the furnace basin illustrating the method of mounting the integrated bubbling nozzle according to the invention;
Fig. 6 shows a plot of the bubble volume from a single opening of the ZDB according to the invention as a function of the air flow rate and the glass temperature;
Fig. 7 show a plot of a diameter of a bubble discharged from a single opening of the integrated bubbling nozzle according to the invention as a function of the air flow rate and the glass temperature;
Fig. 8 is a graph of velocity of a bubble discharged from a single opening of the integrated bubbling nozzle according to the invention as a function of the air flow rate and the glass temperature;
Fig. 9 is a plot of volume of a "collective" bubble formed after combining the bubbles released from individual openings of the integrated bubbling nozzle according to the invention as a function of the air flow rate and the glass temperature;
Fig. 10 is a plot of a diameter of a "collective" bubble formed after combining the bubbles released from individual openings of the integrated bubbling nozzle according to the invention as a function of the air flow rate and the glass temperature;
Fig. 11 is a graph of velocity of a "collective" bubble formed after combining the bubbles released from individual openings of the integrated bubbling nozzle according to the invention as a function of the air flow rate and the glass temperature;
Figures 12a, 12b and 12c show a regenerative U-flame furnace for carrying out the method according to the invention;
Fig. 13 shows the configuration of the bubbling and electric boost systems in the furnace of Figs. 12a-12c.

### Detailed description of the invention

The developed ZDB has significant advantages over bubbling nozzles installed in industrial glass furnaces: 1) higher corrosion resistance and mechanical strength than multi-channel nozzles made of Al₂O₃ only, 2) full resistance to glass melt clogging during air flow stopping, which is the main disadvantage single-hole nozzles made of MoSi₂ and 3) no need to cool with water, which as a source of heat loss is the main disadvantage of nozzles made steel and Inconel^{®} alloys.

Also, the zone homogenization method according to the invention has significant advantages over the hitherto used methods for improving the homogeneity of the glass melt and/or methods for removing inhomogeneity.

Firstly - this method takes into account all origins of these inhomogeneities, secondly - it removes them at the earliest stage of their formation, and thirdly - it allows all three tools to be operated simultaneously, or each of them independently, if it is confirmed that one source or area of the furnace is responsible for the problem. The operation of any of these systems does not interfere with the effects of the furnace firing system or electric boosting on the melted batch or glass.

The heterogeneity of the glass melt arises already at the primary melt formation stage from batch components. The reasons for their generation are the differences in the viscosity and density of melting products and differences in the progress of reaction between various components of the batch in different areas thereof [cf. US7260960. W.M. Carty: Selective Glass Batching Methods for Improving Melting Efficiency (2007); M.H. Chopinet. E. Gouillart, M. Toplis. Influence of limestone grain size on glass homogeneity. Glass technology, Society of Glass Technology, 201.51 (3), pp. 116]. The glass batches from which soda-lime silicate glasses are melted, used to form the majority of melt products: glass packaging and glass panes always contain: quartz sand (SiO₂), soda (Na₂CO₃), limestone flour (CaCO₃) and alternatively: either sodium sulphate (Na₂SO₄) or calcium sulphate (Ca₂SO₄) as a source of fining gases. Most of these batches also contain dolomite (CaMg(CO₃)₂) and feldspar (sodium-potassium aluminosilicate) or granulated blast furnace slag (calcium-magnesium aluminosilicate glass). In addition, batches for colourless glass often contain cerium dioxide and a mixture of cobalt oxide + a selenium compound (ZaSeO₃ or Se), or a mixture of cobalt oxide and erbium oxide, or a mixture of neodymium oxide and erbium oxide, used as decolorizing agents. Batches for colored glass contain raw materials that are iron sources (generally red iron, less often pyrite) and chromium (generally iron chromate).

Conversion of raw material batch to glass takes place by formation of a carbonate melt which is then converted to a silicate melt. Such melt containing carbonates and silicates in various proportions is called a primary melt. From the point of view of glass homogeneity, it is important which of the reaction pathways between the components is dominant: 1) the carbonate pathway, wherein soda and limestone first form a low-melting eutectic (Tt = 785°C), or 2) the silicate pathway, wherein soda and limestone quickly react with sand. The disadvantage of the first pathway is formation of a very low viscosity melt (<2 dPas), which tends to flow to the bottom zones without reacting with the remaining batch components, mainly with sand. The disadvantage of the second pathway is the limestone (and dolomite) decomposition with formation of CaO, which, due to its much higher density than the glass formed, also tends to segregate. The dominance of either the carbonate and or the silicate pathway is unfavorable.

The way of converting the batch into glass in real furnaces depends on many factors, primarily the grain size of the raw materials used, the proportion of cullet in the batch (and its grain size distribution) and the heating rate of the batch. The heating rate, in turn, depends on the thickness of the batch blanket and the method of energy delivery (directly from the flame, with the return convection current of the glass melt or in form of Joule energy released by a system of molybdenum electrodes installed in the melting zone). The batch segregation can also be prevented by briquetting or granulating the batch [cf. EP3708545A1. M. Klisch. Method for granulating batch components. (2019)] or separate mixing of soda and limestone with sand, i.e. so-called selective batching, most preferably combined with briquetting and sintering of such glass precursors [cf. US 7,260,960]. Both approaches require significant investment in new batch preparation installations, which has so far effectively prevented the implementation of these technologies in large-scale glassworks.

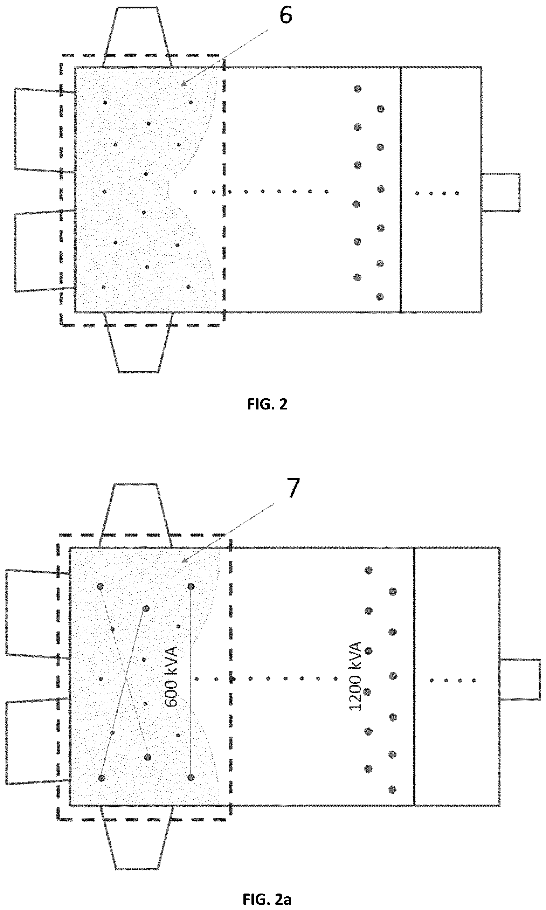

BRZ counteracts segregation of the primary melt by creating streams of gas bubbles directed vertically towards the bottom surface of the batch blanket, which effectively prevents both the Na₂CO₃-CaCO₃ melt and the CaO resulting from limestone and dolomite decomposition from migrating into the bottom layers. Moreover, the mixing effect, caused by BRZ, of the still unreacted raw material grains with the primary melt and the base glass in the furnace accelerates chemical reactions, the progress of which is controlled by diffusion. These are the reactions of sand with all the other batch components and the final dissolution of its grains in the melt formed. Since the dissolution of sand is the slowest stage of the melting process, it is clear that the farther the batch piles move from the pockets, the greater the proportion of sand they contain and the smaller the proportion of readily fusible components: sodium silicates and sodium silicates and limestone. Shortening the so-called batch line, which can be obtained owing to the effective operation of the BRZ, also reduces the furnace volume, where significant inhomogeneities of the glass are formed. In addition, the earlier clearance of the glass surface increases the heat transmission from the furnace combustion space and thus improves the melting energy indexes. The BRZ activity area (marked by reference number 6) is shown in Fig. 2. Due to high mechanical strength and corrosion resistance of the ZDBs, they can be exposed up to a height of 600 mm above the furnace bottom. Reducing the distance between the outlet of air bubbles from the nozzles and the bottom surface of the batch blanket significantly improves the efficiency of bubbling in disintegrating the blanket (crust) of the batch, the efficiency of mixing it with the glass and reversing the flow direction of the carbonate melt and/or CaO grains towards the surface.

The BRZ with the configuration shown in Fig. 2 also breaks the slow-flowing (2-4 mm/s) laminar convection return current of the hot glass melt located just below the mirror surface in the batch melting zone into a system of streams of the glass melt circulating in the micro-regions and mixing hot glass with the cold batch. This provides two further advantages. Firstly, the temperature in the batch melting zone can be maintained in the optimal range of 1300-1350°C, and secondly, it prevents the return current from taking inhomogeneous glass (containing large amounts of unmelted raw material grains and gas bubbles) into the fining area, as is the case with a standard circulation of a return current, where this current returns through the bottom zones up to the rear wall of the furnace. In standard design furnaces, this glass typically has the shortest residence times, the lowest average temperature and the worst quality.

In the case of melting colored glasses, such as green or amber, for which the radiative heat transfer coefficients are 20 to even 100 times lower than for oxidized colorless glasses, instead of dispersed bubbling in the melting zone, a combination of dispersed bubbling and electric boosting is used as shown in Fig. 2a, wherein the reference 7 denotes the activity zone of dispersed bubbling and boosting. This variant is also intended for flint glass furnaces, where very high yields or high output fluctuations are expected. By using a combination of dispersed bubbling and melting electric boost, the expected furnace flexibility is obtained with smaller basin dimensions, and therefore with lower investment costs.

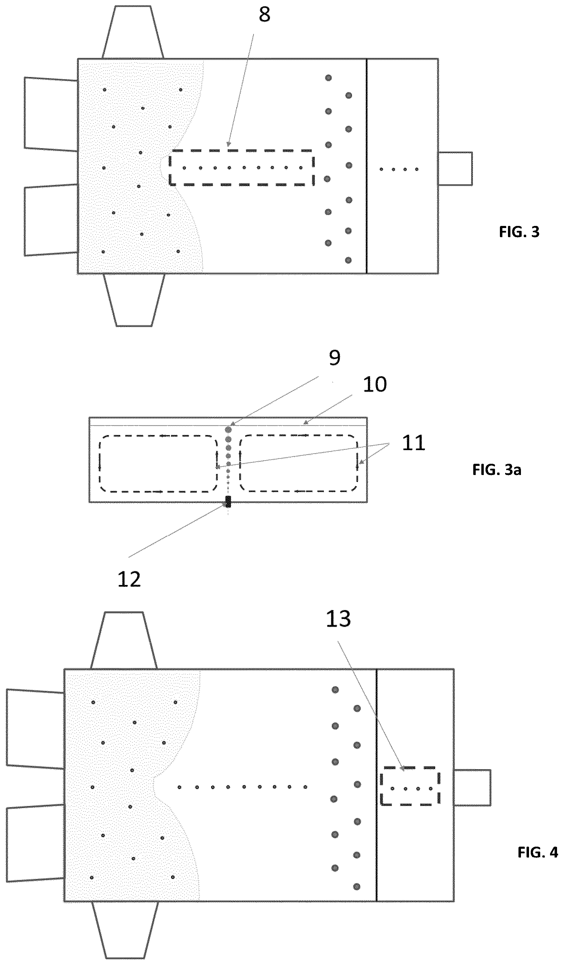

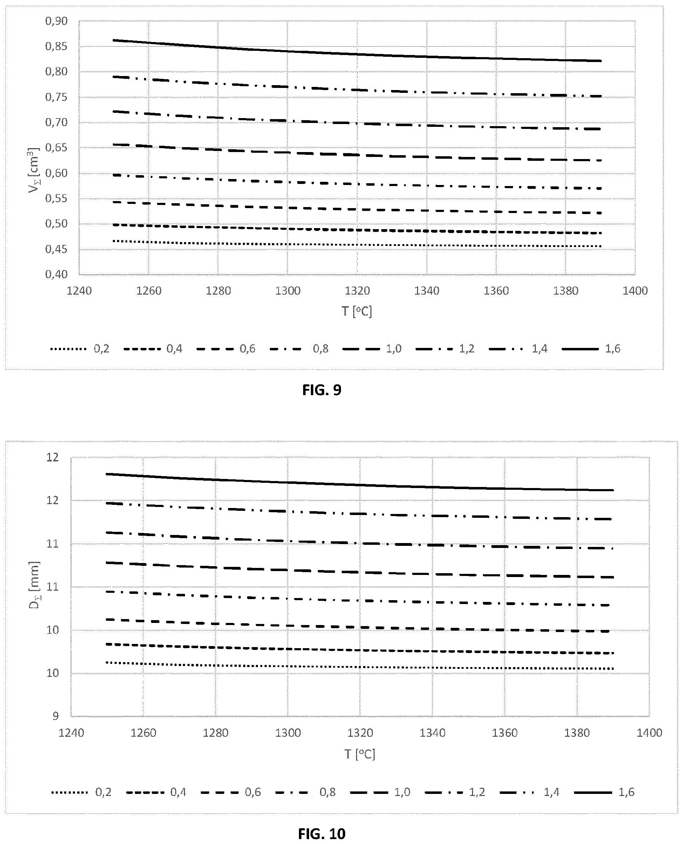

The second system, in-line melting bubbling (BLT), is operated in the sand grain dissolution zone - Fig. 3 (wherein the reference 8 indicates the activity zone of in-line melting bubbling). Its main task is to direct hot glass towards the furnace side walls (fig. 3a, 9 denotes a stream of bubbling bubbles, 10 - a glass surface level, 11 - a circulation of the lateral convection currents of glass, and 12 - a bubbling nozzle) flowing with the return current and thereby to significantly extend the dissolution time of the sand grains so that the glass melt entering the fining zone was free from non-melting relics. Lateral currents are one of the unused or at best underused tools for increasing the melting efficiency in furnaces [cf. L. Nemec, P. Cincibusova. Glass melting and its innovation potentials: the potential role of glass flow in the sand dissolution process. Ceramics - Silikáty 53 (3), 2009, pp. 145-155]. The reason for their limited use in the practice of melting lies in a seemingly unsolvable dilemma: how to create sufficiently large temperature gradients between the glass flowing through the central parts of the basing along the furnace axis and at the one adjacent to the basin side walls without increasing heat losses by the basin lining. Since the use of thick insulation on the basin palisade blocks is one of the widely accepted strategies to improve the energy efficiency of glass furnaces, the only way to impose transverse convection currents is to place either an electrode line or a bubbling line in the bottom along the longitudinal axis of the furnace. The arrangement of an electrode line in the furnace axis aimed to enhance the side convection currents was proposed in WO 2014/036979 A1 [L. Nemec et al. Method for continuous glass melting under controlled convection of glass melt and glass melting furnace for making the same]. Synchronizing of electric boost line in the furnace axis with barrier boost is difficult, in particular in conditions of variable glass output, while disturbing convection currents in a furnace may have serious consequences in form of a long-lasting increase in production reject due to poorly fined glass. It is much easier to achieve cooperation between electric barrier boost and in-line bubbling installed along the furnace axis, especially in the configuration proposed in the solution shown in Fig. 2, wherein the barrier boost consisting of 2 rows, each of 6 electrodes (in smaller furnaces it will be 2 x 3, and in larger ones 2 x 9) and power sufficiently large to generate strong return current of the glass (here 1200 kW) cooperates with a bubbling consisting of 14 nozzles located at 0.3 - 0.6 of the furnace length. The number of BLT nozzles depends on the basin length. As a rule, the distance between adjacent nozzles should be smaller than the diameter of the assumed impact column of the stream of bubbles released by the nozzle, which for typical gas flow rates (0.4 - 0.6 l/min) and diameter of gas transport channels 0.5 mm is approx. 750 mm. As it is most advantageous when the zones of interaction of adjacent nozzles overlap a little, the distance between them should be approx. 500 mm. The high power installed in the barrier boost first of all significantly supports the fining process by defining a well-defined hot spot area in the glass and, moreover, it is an energy source that can be used to intensify the melting process by means of return convection current.

The BLT installed in the area between the batch melting zone and the fining zone provides a better utilisation of this energy than the standard return convection current. The air flow rate in the range of 0.2 - 0.6 l/min generates rising convection currents of glass at rates from 40 to 400 mm/s, i.e. from 10 to even 100 times greater than the horizontal component of the glass return current velocity (approx. 4 mm/s). The use of air flow rates in the range 0.2 - 0.4 l/min allows the total residence time of the glass (RT) to be extended by approx. 2 - 4 hours, i.e. from 7 to 14%. More importantly, the minimum RT, which determines the level of waste due to glass melt defects, is also extended by 1-2 hours. Extending RT in this melting zone has a very positive effect on the dissolution of the sand grains, which is controlled by the removal of the reaction products from their surface, and thus assisted by mixing. This process should be completed before the fining begins, because only after the sand is completely dissolved, the glass obtains its final chemical composition. Moreover, the SiO₂ concentration determines the value of the saturation concentration of CO₂ dissolved in the glass and therefore the last CO₂ bubbles are formed around the sand relics (sometimes invisible to the naked eye). Therefore, it is important to maintain a sequence of processes in the furnace: first dissolving the sand grains, then fining, with no overlap of these stages. In the case of conditions in the furnace (too high glass output from the furnace, too low temperatures, incorrect temperature profile along the furnace axis, etc.), when the last grains of sand dissolve in the glass once the fining is completed, and therefore also after the use of fining agents (sulphates added to the batch), an increased number of gas inclusions is observed in the formed articles, often up to unacceptable level. Relics of unmelted sand grains are also one of the sources of deterioration of the mechanical strength of glass and uncontrolled behavior of the glass during forming (loss of workability).

The lateral convection currents generated by BLTs also systematically wash out the glass containing corrosion products of the basin refractories (and in some cases also the walls of combustion space) and mix it with the base glass. The corrosion mechanism of the palisade refractories is based on the penetration (diffusion) of alkali from the base glass in the furnace into the glassy phase of AZS, constituting up to 33% of the AZS's volume. At the second stage of corrosion, the crystals of the two remaining phases of AZS, first corundum (α-Al₂O₃) and then baddeleyite (ZrO₂), dissolve in this glass. The glass with corrosion products, most often also containing undissolved corundum and baddeleyite grains, flows down the palisade blocks and accumulates in the bottom zones of the furnace. The synergy of corrosion and erosion as well as the Marangoni effect is the cause of the highest wear of the palisade blocks at the glass flux line in the batch melting zone. In furnaces not equipped with in-line bubbling as described herein, deposits of these corrosion products at the bottom form a layer of highly viscous and therefore not very mobile glass. These layers begin to be partially taken up by the base glass in the case of increased output from the furnace, generally accompanied by higher electric boost power being used and a corresponding increase in temperature at the bottom. In laminar flows of glass melt at the velocities caused by natural convection currents, there is no chance of completely dispersing the streaks formed and a defect called a "cat's scratches" is revealed in the formed products. The situation is different in a furnace equipped with BLTs, wherein vertical convection currents occur, transporting the glass towards the surface at a velocity of 10 to even 100 times higher.

A third of the bubbling systems used in a zone homogenization furnace is the in-line bubbling in the resorption zone (BLR) indicated by reference 13 in Fig. 4. The BLR has two functions: 1) extending the glass cooling path and time after completing of the fining process, and 2) carrying out the second stage of homogenization of the glass melt. The process of melting container glass is carried out very intensively (even up to 4 t/m²/24h). High intensity of the melting process forces the shifting of the conventional lines of completion of individual melting stages in the direction of throat, which also applies to fining. The necessity to maintain high glass temperatures required for effective fining in combination with a short path of the glass melt from the hot spot to the throat seriously impedes the resorption process, i.e. secondary dissolution of gases from relict bubbles remaining in the glass melt after the fining process, which takes place effectively only during the glass cooling (most preferably even by 150 - 200°C, i.e. from 1500-1580°C to 1330-1380°C), because solubility of SO₂ and O₂, i.e. the gases remaining after the fining process, increases with the decrease of the glass temperature.

The streams of bubbles from the BLR nozzles are released 450-500 mm above the bottom of the deep portion of the basin along the product current axis, and importantly also above the upper edge of the throat entry, so that most of the glass flowing from the shallow portion instead of flowing directly into the throat it is directed back up and further towards the side walls of the basin. The glass circulation due to the convection currents generated by the BLR is identical to that shown in Fig. 3a. In this way, thermal homogenization and additional chemical homogenization of the glass take place, and the extended return path at the bottom favors additional cooling and the disappearance of relict gas bubbles. In this way, the glass reaching the throat is better homogenized and fined.

### Working examples

### Integrated bubbling nozzle design

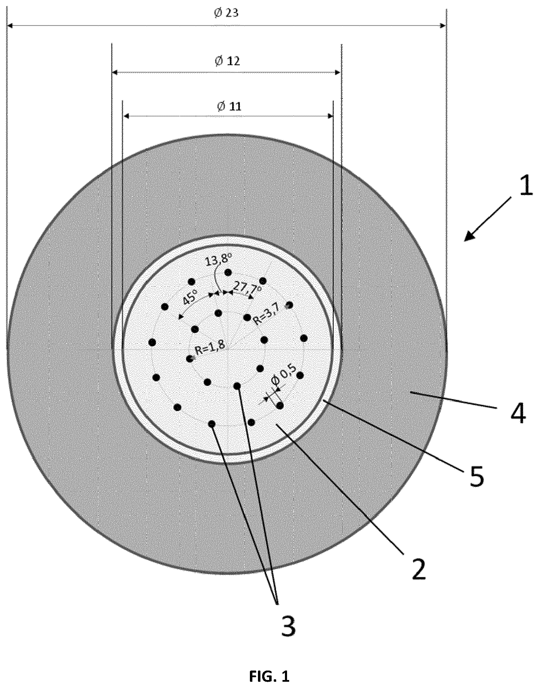

The design of the integrated bubbling nozzle according to the invention is illustrated in Fig. 1, showing a cross-section of the integrated bubbling nozzle 1 comprising an inner core 2 with a system of gas transport channels 3 arranged in parallel. The inner core 2, made of ceramics containing at least 90% by weight of alumina, is housed in a thick-walled molybdenum disilicide casing 4 and permanently connected to it by means of a refractory ceramic cement 5.

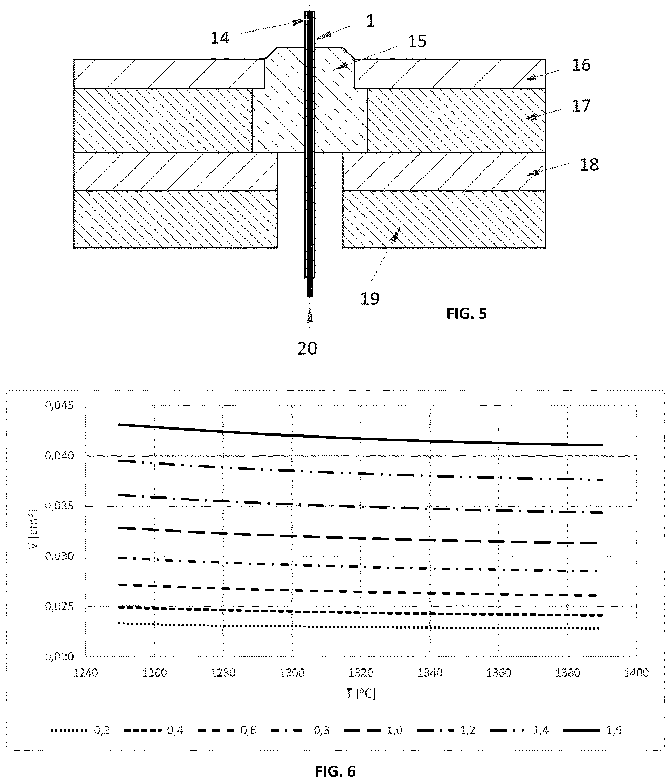

The method of installing a single integrated bubbling nozzle in the bottom of the furnace is shown in Fig. 5, in which the integrated bubbling nozzle 1 is embedded in a ceramic bubbling block (AZS) 15. From the inside of the furnace basin, the nozzle 1 has an outlet for a stream of gas bubbles 14, and on the opposite side - a gas inlet 20. The bubbling block 15 is mounted in the bottom of the furnace basin, which is built layerwise and - starting from the inside of the furnace basin - contains successively an AZS layer 16, a silimanite layer 17, a fireclay layer 18 and a ceramic basin insulation layer 19.

The parameters of the integrated bubbling nozzle shown in Fig. 1 are as follows:
1. Number of openings - 20,
2. Diameter of a single opening - 0.5 mm,
3. Area of a single opening - 0.20 mm²,
4. Total area of the openings - 3.93 mm²,
5. Equivalent diameter (of 1 opening of the same area) - 2,24 mm.

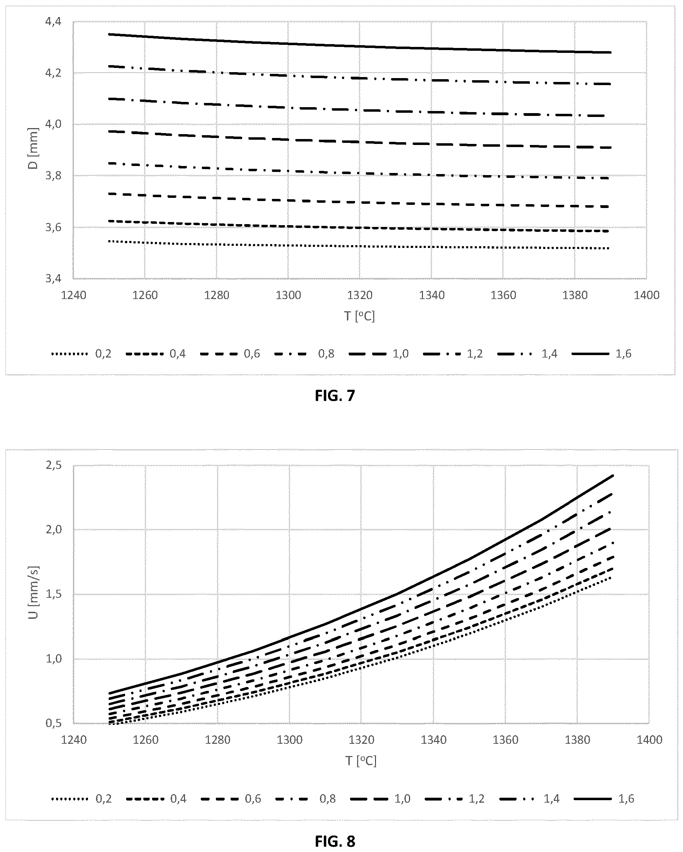

Parameters of the air bubbles, i.e. their volume - V, diameter - D and the velocity of U released from the outlet of a single channel of the integrated bubbling nozzle into the glass melt having the chemical composition as in Table 1 and the properties as in Table 2 are shown in Table 3 and in figs. 6-8. Table 3 and figs. 9-11 also show the parameters, i.e. the volume - V_{S}, diameter - D_{S} and velocity - U_{S} of the bubbles formed by combining 20 individual bubbles released from 20 channels of the integrated bubbling nozzle to the glass melt having the chemical composition as in Table 1 and the properties as in Table 2.

**Table 1. Chemical composition of glass used for the calculation of bubbling parameters.**

| SiO₂ | Al₂O₃ | Na₂O | K₂O | MgO | CaO | Fe₂O₃ | TiO₂ | MnO | SO₃ | LRZ |
|---|---|---|---|---|---|---|---|---|---|---|
| | [wt. %] | | | | | | | | | |
| 71.44 | 1.51 | 13.56 | 0.37 | 1.80 | 11.21 | 0.04 | 0.08 | 0.01 | 0.18 | 5.30 |

| | | | | | | | | | | |
|---|---|---|---|---|---|---|---|---|---|---|
| LRZ: Batch Redox Number | | | | | | | | | | |

**Table 2. Properties of the glass having the composition of table 1 for the temperature range 1250 - 1390°C**

| T [°C] | T[K] | η[Pas] | ρ[kg/M³] | σ [N/m] | ν=η/ρ [m²/s] |
|---|---|---|---|---|---|
| 1250 | 1523 | 47.18 | 2319.9 | 0.3226 | 0.0203 |
| 1270 | 1543 | 38.71 | 2317.0 | 0.3221 | 0.0167 |
| 1290 | 1563 | 32.01 | 2314.1 | 0.3216 | 0.0138 |
| 1310 | 1583 | 26.67 | 2311.2 | 0.3211 | 0.0115 |
| 1330 | 1603 | 22.37 | 2308.3 | 0.3207 | 0.0097 |
| 1350 | 1623 | 18.89 | 2305.4 | 0.3202 | 0.0082 |
| 1370 | 1643 | 16.04 | 2302.5 | 0.3197 | 0.0070 |
| 1390 | 1663 | 13.71 | 2299.6 | 0.3192 | 0.0060 |

**Table 3. Volume, diameter and velocity of bubbles released from integrated bubbling nozzle.**

| Q [l/min] | Q [m³/h] | T [°C] | V [cm³] | D [mm] | V_{S} [cm³] | D_{S} [mm] | U [mm/s] | U_{S} [mm/s] |
|---|---|---|---|---|---|---|---|---|
| 0.2 | 3.33E-06 | 1250 | 0.023 | 3.55 | 0.467 | 9.62 | 0.49 | 3.58 |
| | | 1270 | 0.023 | 3.54 | 0.463 | 9.60 | 0.59 | 4.34 |
| | | 1290 | 0.023 | 3.53 | 0.461 | 9.58 | 0.71 | 5.23 |
| | | 1310 | 0.023 | 3.53 | 0.460 | 9.57 | 0.85 | 6.26 |
| | | 1330 | 0.023 | 3.52 | 0.459 | 9.57 | 1.01 | 7.44 |
| | | 1350 | 0.023 | 3.52 | 0.458 | 9.56 | 1.19 | 8.79 |
| | | 1370 | 0.023 | 3.52 | 0.457 | 9.56 | 1.40 | 10.32 |
| | | 1390 | 0.023 | 3.52 | 0.456 | 9.55 | 1.64 | 12.05 |
| 0.4 | 6.67E-06 | 1250 | 0.025 | 3.62 | 0.498 | 9.84 | 0.51 | 3.74 |
| | | 1270 | 0.025 | 3.61 | 0.495 | 9.81 | 0.62 | 4.54 |
| | | 1290 | 0.025 | 3.61 | 0.491 | 9.79 | 0.74 | 5.46 |
| | | 1310 | 0.024 | 3.60 | 0.489 | 9.77 | 0.89 | 6.52 |
| | | 1330 | 0.024 | 3.60 | 0.487 | 9.76 | 1.05 | 7.75 |
| | | 1350 | 0.024 | 3.59 | 0.485 | 9.75 | 1.24 | 9.14 |
| | | 1370 | 0.024 | 3.59 | 0.484 | 9.74 | 1.46 | 10.73 |
| | | 1390 | 0.024 | 3.59 | 0.483 | 9.73 | 1.70 | 12.51 |
| 0.6 | 1.00E-05 | 1250 | 0.027 | 3.73 | 0.543 | 10.12 | 0.54 | 3.97 |
| | | 1270 | 0.027 | 3.72 | 0.538 | 10.09 | 0.65 | 4.80 |
| | | 1290 | 0.027 | 3.71 | 0.534 | 10.06 | 0.78 | 5.77 |
| | | 1310 | 0.027 | 3.70 | 0.530 | 10.04 | 0.93 | 6.88 |
| | | 1330 | 0.026 | 3.69 | 0.527 | 10.02 | 1.11 | 8.17 |
| | | 1350 | 0.026 | 3.69 | 0.525 | 10.01 | 1.31 | 9.64 |
| | | 1370 | 0.026 | 3.68 | 0.523 | 10.00 | 1.53 | 11.30 |
| | | 1390 | 0.026 | 3.68 | 0.522 | 9.99 | 1.79 | 13.18 |
| 0.8 | 1.33E-05 | 1250 | 0.030 | 3.85 | 0.597 | 10.45 | 0.57 | 4.22 |
| | | 1270 | 0.030 | 3.83 | 0.590 | 10.41 | 0.69 | 5.10 |
| | | 1290 | 0.029 | 3.82 | 0.585 | 10.38 | 0.83 | 6.13 |
| | | 1310 | 0.029 | 3.81 | 0.581 | 10.35 | 0.99 | 7.31 |
| | | 1330 | 0.029 | 3.81 | 0.577 | 10.33 | 1.18 | 8.68 |
| | | 1350 | 0.029 | 3.80 | 0.574 | 10.31 | 1.39 | 10.23 |
| | | 1370 | 0.029 | 3.79 | 0.572 | 10.30 | 1.63 | 11.99 |
| | | 1390 | 0.029 | 3.79 | 0.570 | 10.29 | 1.90 | 13.98 |
| 1.0 | 1.67E-05 | 1250 | 0.033 | 3.97 | 0.657 | 10.78 | 0.61 | 4.50 |
| | | 1270 | 0.032 | 3.96 | 0.649 | 10.74 | 0.74 | 5.44 |
| | | 1290 | 0.032 | 3.94 | 0.643 | 10.71 | 0.89 | 6.53 |
| | | 1310 | 0.032 | 3.93 | 0.638 | 10.68 | 1.06 | 7.79 |
| | | 1330 | 0.032 | 3.93 | 0.634 | 10.66 | 1.25 | 9.24 |
| | | 1350 | 0.032 | 3.92 | 0.631 | 10.64 | 1.48 | 10.89 |
| | | 1370 | 0.031 | 3.91 | 0.628 | 10.62 | 1.73 | 12.76 |
| | | 1390 | 0.031 | 3.91 | 0.626 | 10.61 | 2.02 | 14.88 |
| 1.2 | 2.00E-05 | 1250 | 0.036 | 4.10 | 0.721 | 11.13 | 0.65 | 4.79 |
| | | 1270 | 0.036 | 4.08 | 0.713 | 11.08 | 0.79 | 5.79 |
| | | 1290 | 0.035 | 4.07 | 0.706 | 11.05 | 0.94 | 6.95 |
| | | 1310 | 0.035 | 4.06 | 0.700 | 11.02 | 1.13 | 8.29 |
| | | 1330 | 0.035 | 4.05 | 0.696 | 11.00 | 1.33 | 9.83 |
| | | 1350 | 0.035 | 4.04 | 0.692 | 10.98 | 1.57 | 11.59 |
| | | 1370 | 0.034 | 4.04 | 0.689 | 10.96 | 1.84 | 13.58 |
| | | 1390 | 0.034 | 4.03 | 0.687 | 10.95 | 2.15 | 15.83 |
| 1.4 | 2.33E-05 | 1250 | 0.040 | 4.23 | 0.790 | 11.47 | 0.69 | 5.09 |
| | | 1270 | 0.039 | 4.21 | 0.781 | 11.42 | 0.83 | 6.15 |
| | | 1290 | 0.039 | 4.20 | 0.773 | 11.39 | 1.00 | 7.38 |
| | | 1310 | 0.038 | 4.18 | 0.767 | 11.36 | 1.20 | 8.81 |
| | | 1330 | 0.038 | 4.18 | 0.762 | 11.33 | 1.42 | 10.44 |
| | | 1350 | 0.038 | 4.17 | 0.758 | 11.31 | 1.67 | 12.31 |
| | | 1370 | 0.038 | 4.16 | 0.755 | 11.30 | 1.96 | 14.43 |
| | | 1390 | 0.038 | 4.16 | 0.752 | 11.28 | 2.28 | 16.82 |
| 1.6 | 2.67E-05 | 1250 | 0.043 | 4.35 | 0.862 | 11.81 | 0.73 | 5.40 |
| | | 1270 | 0.043 | 4.33 | 0.852 | 11.76 | 0.88 | 6.52 |
| | | 1290 | 0.042 | 4.32 | 0.844 | 11.72 | 1.06 | 7.83 |
| | | 1310 | 0.042 | 4.31 | 0.837 | 11.69 | 1.27 | 9.34 |
| | | 1330 | 0.042 | 4.30 | 0.832 | 11.67 | 1.50 | 11.07 |
| | | 1350 | 0.041 | 4.29 | 0.828 | 11.65 | 1.77 | 13.05 |
| | | 1370 | 0.041 | 4.29 | 0.824 | 11.63 | 2.08 | 15.30 |
| | | 1390 | 0.041 | 4.28 | 0.821 | 11.62 | 2.42 | 17.83 |

### Example of the implementation of glass melt zone homogenization systems

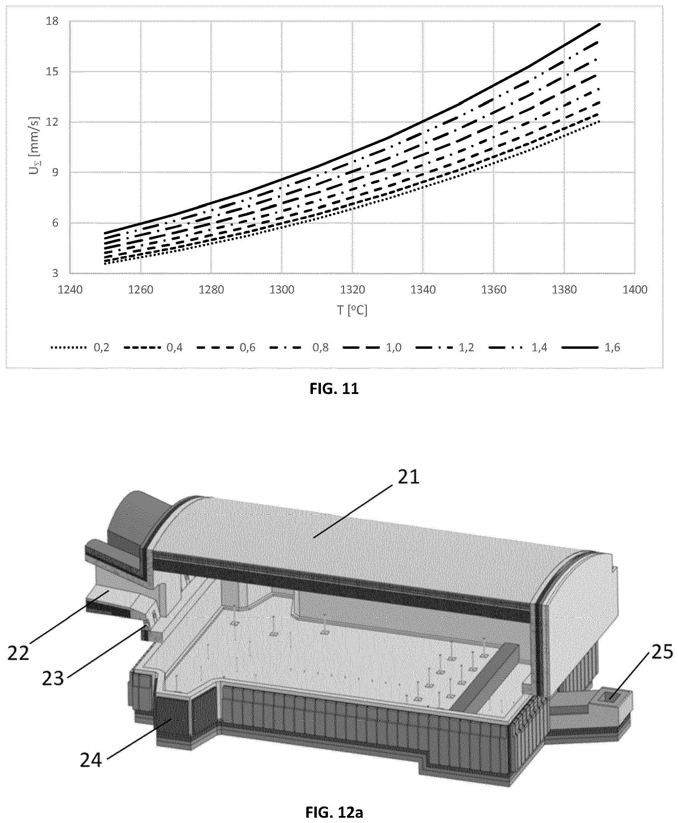

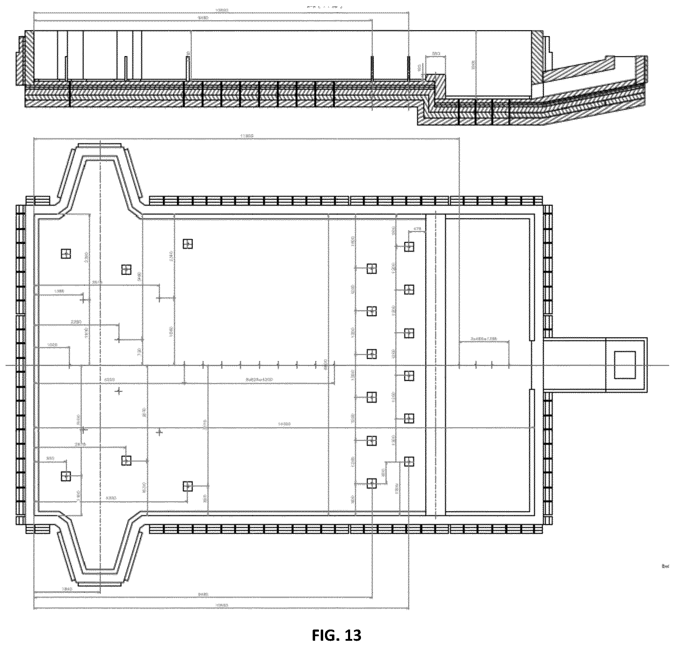

An example of the batch dispersed melting bubbling, in-line melting bubbling and in-line resorption bubbling configurations composing a zone homogenization system of the glass melt during melting in a regenerative U-flame furnace with a variable bottom geometry (shallower in the melt portion and deeper in the resorption zone) is shown in Figs. 12a-12c. The furnace shown in Figs. 12a-12c with a capacity of 350 t/24h is also additionally equipped with a melting boost and a barrier boost. Details of the configuration of bubbling and electric boost systems in a regenerative U-flame furnace with zone glass homogenization technology are shown in Fig. 13.

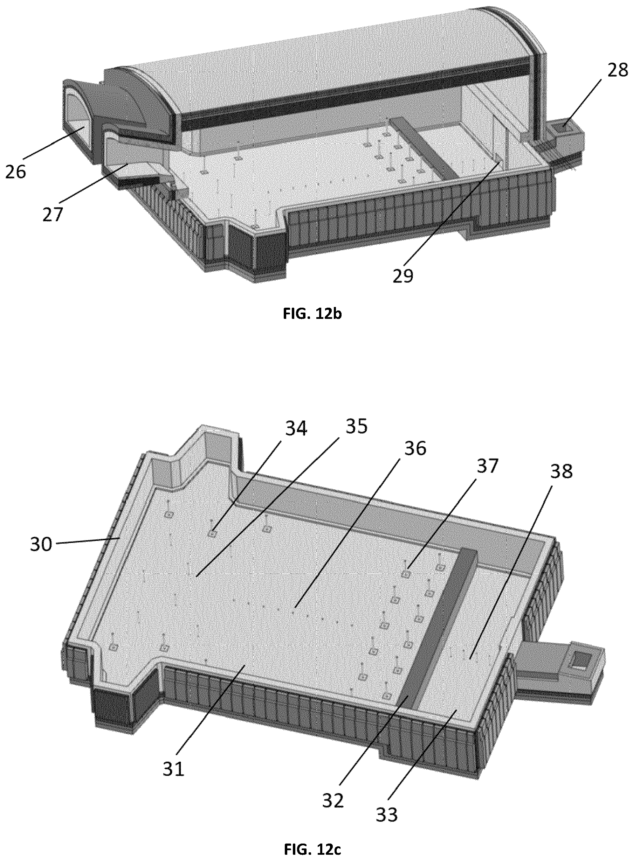

In the furnace view in Fig. 12a, the reference 21 denotes a furnace crown, 22 - a burner port, 23 - a burner nozzle, 24 - a batch charging dog house and 25 - a throat. In turn, in the furnace view in Fig. 12b, the reference 26 denotes a flue gas exhaust, 27 - a combustion air inlet, 28 - a glass exit from the throat(a riser), and 29 - a glass entry into the throat. In Fig. 12c, the reference 30 denotes a basin palisade, 31 - a shallow basin part, 32 - a threshold at the bottom of the basin, 33 - a deep basin portion, 34-a batch melting electric boost, 35-a batch melting dispersed bubbling, 36 - a in-line melting bubbling, 37 - a barrier boost, and 38 - a in-line resorption bubbling.

## Claims

1. An integrated bubbling nozzle (1) comprising an inner core (2) with a system of gas transport channels (3) arranged in parallel, the core (2) being made of ceramics containing at least 90% by weight of alumina and housed in a thick-walled casing (4) made of molybdenum disilicide, **characterized in that** the inner core (2) is permanently connected to the thick-walled casing (4) by means of a refractory ceramic cement (5).

2. The integrated bubbling nozzle according to claim 1, **characterized in that** the diameter of the gas transport channels (3) is less than 1 mm, most preferably less than 0.5 mm.

3. A method of zone homogenization of glass melt during melting, said method utilizing at least two of the following bubbling systems: (i) a dispersed bubbling in a batch melting zone, (ii) a in-line bubbling in a melting zone, and (iii) a in-line bubbling in a resorption zone, **characterized in that** the bubbling systems are composed of the integrated bubbling nozzles of claim 1 or 2.

4. The method according to claim 3, **characterized in that** the integrated bubbling nozzles forming the dispersed bubbling in the batch melting zone are arranged in the bottom across the width of a basin in a regular or irregular manner in the area from 0 to 0.4 of its length, calculated from the basin back wall along the glass melt flow direction.

5. The method according to claim 3, **characterized in that** the integrated bubbling nozzles forming the in-line bubbling in the melting zone are arranged in the bottom in a line along the basin axis in a regular or irregular manner in the area from 0.3 to 0.6 of its length, calculated from the basin back wall along the direction of glass melt flow direction.

6. The method according to claim 3, **characterized in that** the integrated bubbling nozzles forming the in-line bubbling of resorption are arranged in the bottom in a line along the basin axis in a regular or irregular manner in the area from 0.85 to 0.95 of its length, calculated from the basin back wall along the direction of glass melt flow direction.

7. The method according to one of the claims 3 - 6, **characterized in that** at least one electric boosting system is simultaneously used during the melting, preferably selected from the melting boost and the barrier boost.

8. The method according to claim 7, **characterized in that** said at least one electric boost system uses integrated electrodes-bubbling nozzles, wherein the bubbling nozzles are the integrated bubbling nozzles of claims 1 or 2.

9. The method according to one of the claims 7-8, **characterized in that** the electric boost system consists of 6 or more electrodes placed in the bottom of the basin in the area up to 0.4 of its length, calculated from the basin back wall along the direction of glass melt flow direction.

10. The method according to one of claims 7-8, **characterized in that** the electric boost system consists of 6 or more electrodes placed in the bottom of the pool in one or 2 lines in the area from 0.7 to 0.85 of its length, calculated from the basin back wall along the direction of glass melt flow direction.

11. The method according to claims 3-8, **characterized in that** gas outlets of the integrated bubbling nozzles are located 50 to 700 mm above the furnace bottom.

12. The method according to claims 3-11, **characterized in that** air or water or steam or air enriched with steam or nitrogen or natural gas or propane or butane or helium is used as the bubbling gas.

13. The method according to claims 3-12, **characterized in that** gas flow rate per nozzle is between 0.2 and 2 l/min.
